# EUROPÄISCHE PATENTANMELDUNG

(11) **EP 1 452 883 A2**
(43) Veröffentlichungstag der Anmeldung: **01.09.2004**
(21) Anmeldenummer: 04001341.9
(22) Anmeldetag: 22.01.2004
(51) Int. Cl.: G01R 33/09

(54) **Optische Sende- und Empfangsanordnung**

(30) Priorität: 26.02.2003 DE 10308285
(71) Anmelder: SICK AG, 79183 Waldkirch/Breisgau (DE)
(72) Erfinder: Schuler, Werner, 79261 Gutach-Bleibach (DE)
(74) Vertreter: Manitz, Finsterwald & Partner GbR

(57) **Zusammenfassung**

Die Erfindung betrifft eine optische Anordnung mit einer Mehrzahl von Sendeelementen und/oder Empfangselementen, einer Mehrzahl von diffraktiven und/oder refraktiven optischen Elementen und einem Optikträger für die diffraktiven und/oder refraktiven optischen Elemente, wobei der Optikträger Blendenöffnungen aufweist, in deren Bereich die diffraktiven und/oder refraktiven optischen Elemente mittels eines Spritz- oder Gießprozesses mit dem Optikträger verbunden sind. Weiterhin ist die Erfindung auf ein Verfahren zur Herstellung einer derartigen optischen Anordnung gerichtet.

## Beschreibung

Die Erfindung betrifft eine optische Anordnung mit einer Mehrzahl von Sendeelementen und/oder Empfangselementen, einer Mehrzahl von diffraktiven und/oder refraktiven optischen Elementen und einem Optikträger für die diffraktiven und/oder refraktiven optischen Elemente. Weiterhin ist die Erfindung auf ein Verfahren zur Herstellung einer derartigen optischen Anordnung gerichtet.

Optische Anordnungen der genannten Art werden z.B. dann eingesetzt, wenn ein definierter Schutzbereich auf das Eindringen von Objekten überwacht werden muss. Typische Anwendungen sind beispielsweise Lichtvorhänge bei automatischen Produktionsanlagen, die einen Stopp der Produktionsanlage auslösen, wenn ein Objekt in einen Schutzbereich eindringt, um auf diese Weise Personen- oder Sachschäden zu vermeiden.

Eine optische Anordnung der eingangs genannten Art ist aus der europäischen Patentanmeldung EP 0 867 732 bekannt. Der dort beschriebene Aufbau umfasst z.B. eine Vielzahl von Licht aussendenden Sendeelementen und Licht empfangenden Empfangselementen, eine Vielzahl von den Sende- und Empfangselementen zugeordneten diffraktiven bzw. refraktiven optischen Elementen und eine transparente Frontabdeckung. Dabei sind die diffraktiven und/oder refraktiven optischen Elemente unmittelbar in der transparenten Frontabdeckung ausgebildet, insbesondere in diese eingeprägt oder eingegossen, so dass die Frontabdeckung gleichzeitig ein Trägerelement für die optischen Elemente bildet.

Der einstückige Aufbau von Frontscheibe und optischen Elementen besitzt zwar einerseits den Vorteil einer einfachen und wirtschaftlichen Herstellungsweise, andererseits ist es aber weiterhin nötig, die optischen Elemente gegenüber der jeweils zugeordneten Blende bzw. dem zugeordneten Tubus genau zu justieren, was einen nachteiligen Montageaufwand bedingt. Zudem bringt der einstückige Aufbau von Frontscheibe und optischen Elementen keinerlei Vorteile, wenn in bestimmten Anwendungsfällen im Bereich der optischen Elemente keine Frontscheibe benötigt wird. Schließlich können Temperaturschwankungen oder Alterungsprozesse der verwendeten Materialien dazu führen, dass sich ein optisches Element gegenüber der zugeordneten Blende bzw. dem zugeordneten Tubus verschiebt, so dass eine fehlerfreie Funktion der optischen Gesamtanordnung nicht mehr sichergestellt werden kann.

Aufgabe der vorliegenden Erfindung ist es, eine optische Anordnung der eingangs genannten Art bereitzustellen, die bei einfacher und wirtschaftlicher Herstellungsweise ihrer Einzelkomponenten mit geringem Aufwand montierbar ist und die insbesondere auch eine gegenüber dem Stand der Technik erhöhte Funktionssicherheit besitzt. Weiterhin soll ein Verfahren zur einfachen, effizienten und kostengünstigen Fertigung und Montage der genannten Anordnung bereitgestellt werden.

Die erstgenannten Aufgaben werden durch eine erfindungsgemäße Anordnung nach Anspruch 1 und insbesondere durch eine optische Anordnung gelöst, die eine Mehrzahl von Sendeelementen und/oder Empfangselementen, eine Mehrzahl von diffraktiven und/oder refraktiven optischen Elementen und einen Optikträger für die diffraktiven und/oder refraktiven optischen Elemente aufweist, wobei der Optikträger Blendenöffnungen besitzt, in deren Bereich die diffraktiven und/ oder refraktiven optischen Elemente mittels eines Spritz- oder Gießprozesses mit dem Optikträger verbunden sind.

Die letztgenannte Aufgabe wird durch ein erfindungsgemäßes Verfahren nach Anspruch 21 und insbesondere durch ein Verfahren zur Herstellung einer optischen Anordnung der eingangs genannten Art gelöst, bei dem in einem ersten Verfahrensschritt der Optikträger zumindest mit Blendenöffnungen versehen wird und bei dem in einem weiteren Verfahrensschritt die diffraktiven und/oder refraktiven optischen Elemente mittels eines Spritz- oder Gießprozesses im Bereich der Blendenöffnungen mit dem Optikträger verbunden werden.

Erfindungsgemäß wird also der für die Herstellung der diffraktiven und/oder refraktiven optischen Elemente eingesetzte Spritz- oder Gießprozess gleichzeitig dazu verwendet, eine Verbindung zwischen den diffraktiven und/ oder refraktiven optischen Elementen und dem Optikträger herzustellen, so dass hier ein separater Arbeitsvorgang zur Herstellung dieser Verbindung auf wirtschaftliche Weise entfallen kann.
Da in dem Optikträger bereits die den diffraktiven und/oder refraktiven optischen Elementen zuzuordnenden Blendenöffnungen ausgebildet sind, kann das Anspritzen der diffraktiven und/oder refraktiven optischen Elemente an den Optikträger derart erfolgen, dass die Blendenöffnungen oder in definierten Beziehungen zu den Blendenöffnungen stehende Punkte als Bezugspunkte für den Spritz- oder Gießprozess dienen. Auf diese Weise kann sichergestellt werden, dass die diffraktiven und/oder refraktiven optischen Elemente exakt zu den Blendenöffnungen justiert sind, ohne dass hierfür ein separater Arbeitsvorgang nötig wäre.
Durch die auf erfindungsgemäße Art und Weise geschaffene feste Verbindung zwischen den diffraktiven und/oder refraktiven optischen Elementen und dem die Blendenöffnungen aufweisenden Optikträger wird sichergestellt, dass durch Temperaturschwankungen und Alterungsprozesse keine nennenswerte Verschiebung zwischen diffraktiven und/ oder refraktiven optischen Elementen und den jeweils zugeordneten Blendenöffnungen stattfindet, so dass in dieser Hinsicht eine fehlerfreie Funktion der optischen Gesamtanordnung sichergestellt ist.

Die erfindungsgemäß eingesetzten, mittels eines Spritz- oder Gießprozesses hergestellten diffraktiven bzw. refraktiven optischen Elemente bewirken eine Strahlformung der von den Sendeelementen ausgehenden bzw. der auf die Empfangselemente einfallenden Strahlung. Sie können als sphärische oder asphärische Linsen, als Zylinderlinsen oder auch als Fresnel-Linsen ausgebildet sein.

Vorteilhaft ist es, wenn die mehreren optischen Elemente nicht als Einheit miteinander verbunden, sondern einzeln auf dem Optikträger angeordnet sind, da dann einerseits infolge von Temperaturänderungen keine Kräfte zwischen den verschiedenen optischen Elementen wirken können und andererseits eine beliebige Positionierung der optischen Elemente erfolgen kann. Die einzeln auf dem Optikträger angeordneten optischen Elemente können dabei voneinander beabstandet sein oder aneinander angrenzen.

Um die erfindungsgemäße Verbindung der optischen Elemente mit dem Optikträger sicherzustellen, können die optischen Elemente zumindest je eine im Rahmen des Spritz- oder Gießvorgangs hergestellte Hinterschneidung aufweisen, in die der Rand der zugeordneten Blendenöffnung eingreift.

Zusätzlich oder alternativ können die optischen Elemente auch im Rahmen des Spritz- oder Gießvorgangs erzeugte Fortsätze mit Hinterschneidungen aufweisen, in welche die Ränder von zusätzlichen, im Optikträger ausgebildeten Befestigungsöffnungen eingreifen.
Vorteilhaft ist es, wenn jeder Blendenöffnung eine Anzahl zusätzlicher Befestigungsöffnungen zugeordnet ist, wobei die einer Blendenöffnung zugeordneten zusätzlichen Befestigungsöffnungen jeweils im wesentlichen gleich verteilt um diese Blendenöffnung herum angeordnet werden können, um so eine besonders stabile Befestigung zu erzielen.

Da von Anwendung zu Anwendung der Abstand zwischen zwei benachbarten optischen Elementen variieren kann und es erstrebenswert ist, einen einzigen Optikträgertyp für möglichst viele Anwendungsfälle einzusetzen, kann es sinnvoll sein, einen Optikträger mit einer hohen Anzahl von z.B. entlang einer geraden Linie angeordneten Blendenöffnungen zu versehen. So können dann für einen Anwendungsfall beispielsweise alle Blendenöffnungen mit optischen Elementen bestückt werden, wohingegen bei anderen Anwendungsfällen nur ein Teil der Blendenöffnungen, beispielsweise nur jede dritte Blendenöffnung, mit einem optischen Element versehen wird. Dadurch lässt sich die Bevorratung von unterschiedlichen Optikträgertypen auf ein Minimum reduzieren.

Weiterhin kann es im Rahmen der Erfindung auch sinnvoll sein, den Optikträger so auszugestalten, dass die darin vorhandenen Blendenöffnungen zu Blendentubussen weitergebildet sind, so dass sich durch den Spritzoder Gießvorgang eine exakte Positionierung der optischen Elemente gegenüber diesen Blendentubussen ergibt.

Die Mehrzahl der Anwendungen, insbesondere eine Lichtgitteranwendung, erfordert einen streifenförmigen Aufbau des Optikträgers. Bevorzugt ist es, wenn der Optikträger als Stanzstreifen ausgebildet ist, da so eine wirtschaftliche Herstellung möglich wird.

Um bei einer automatischen Bestückung des Optikträgers mit optischen Elementen eine möglichst hohe Positioniergenauigkeit zu erreichen, ist es günstig, den Optikträger zu diesem Zweck im Randbereich mit Aussparungen zu versehen, die der Zentrierung und Ausrichtung des Optikträgers in einer Spritzmaschine dienen.

Je nach Anwendung kann der mit den optischen Elementen bestückte Optikträger als starres Element oder flexibel, insbesondere aufwickelbar, ausgebildet sein. Bei einer flexiblen Ausbildung ergibt sich der Vorteil, dass die jeweils benötigten Optikträger von einer Rolle abgewickelt werden und in jeweils gewünschter Länge abgetrennt werden können.
Alternativ ist es aber auch möglich, den Optikträger als starren, ablängbaren Streifen auszubilden.

Die Sende- und/oder Empfangselemente einer erfindungsgemäßen Anordnung werden in der Regel auf einem Elektronikträger angebracht, der starr oder flexibel ausgebildet sein kann. Bevorzugt handelt es sich dabei um eine Elektronikplatine. Typischerweise sind jeweils mindestens ein optisches Element, eine Blendenöffnung bzw. ein Tubus und ein Sende- oder Empfangselement koaxial entlang der optischen Achse des optischen Elements angeordnet.

Entsprechend einer weiteren bevorzugten Ausführungsform der Erfindung ist es günstig, den mit den Blendenöffnungen und den optischen Elementen versehenen Optikträger mit dem mit den Sende- und/oder Empfangselementen versehenen Elektronikträger so zu verbinden, dass die genannte koaxiale Anordnung entsteht. Diese Verbindung kann beispielsweise mittels einer Schnappverbindung hergestellt werden.

Um die so entstandene Einheit vor unerwünschten Umwelteinflüssen wie beispielsweise dem Eindringen von Schmutz oder Feuchtigkeit zu schützen oder um ihr mechanische Stabilität zu verleihen, ist es vorteilhaft, diese in einem Gehäuse unterzubringen. Hierzu eignet sich z.B. ein Stranggussprofil, bevorzugt aus Aluminium.
Insbesondere kann hier ein U-förmiges Stranggussprofil zum Einsatz gelangen. Durch an geeigneter Stelle im Stranggussprofil angeordnete Haltenuten lässt sich die zuvor genannte Einheit so in das Stranggussprofil einschieben, dass die mit den optischen Elementen bestückten Seite in Richtung der offenen Seite des Stranggussprofils weist.

Die Erfindung kann insbesondere bei der Herstellung von Lichtvorhängen zur Anwendung kommen. Hier kann beispielsweise ein Paar von zwei erfindungsgemäßen optischen Anordnungen eingesetzt werden, von denen eine als reine Sendeanordnung und die andere als reine Empfangsanordnung aufgebaut ist. Sende- und Empfangsanordnung werden dann einander gegenüberliegend so orientiert, dass die von den Sendeelementen ausgehenden Strahlen von der gegenüberliegenden Empfangsanordnung detektiert werden können.

Wie eingangs erwähnt, liegt der vorliegenden Erfindung außerdem die Aufgabe zugrunde, ein Verfahren zur einfachen, effizienten und kostengünstigen Fertigung und Montage der genannten Anordnung bereitzustellen. Ein derartiges Verfahren kann wie folgt ablaufen:

In einem ersten Verfahrensschritt wird der Optikträger zumindest mit Blendenöffnungen versehen. Ebenso können insbesondere gleichzeitig weitere Befestigungsöffnungen sowie Aussparungen zum Zweck der Positionierung in den Optikträger eingebracht werden. Bevorzugt geschieht dies durch einen Stanzprozess, wobei es vorteilhaft ist, wenn durch diesen Stanzprozess auch der Optikträger selbst aus einem flächigen Material ausgestanzt wird. In letztgenanntem Fall entsteht also durch einen einzigen Stanzvorgang der Optikträger einschließlich aller erforderlichen Blendenöffnungen, Befestigungsöffnungen sowie Aussparungen.

In einem weiteren Verfahrensschritt werden die diffraktiven und/oder refraktiven optischen Elemente mittels eines Spritz- oder Gießprozesses im Bereich der Blendenöffnungen mit dem Optikträger verbunden. Dies kann beispielsweise geschehen, indem der Optikträger im Bereich der Blendenund/ oder der Befestigungsöffnungen von beiden Seiten mit einem zweiteiligen Spritzgießwerkzeug umschlossen wird. Das Spritzgießwerkzeug ist dabei so ausgebildet, dass die optischen Elemente beim Einspritzen in der gewünschten Form ausgebildet und gleichzeitig mit dem Optikträger über die Blendenöffnung und/oder die Befestigungsöffnungen verbunden werden.

Mittels eines einzigen Spritz- oder Gießprozesses kann entweder ein einzelnes optisches Element oder eine Gruppe von optischen Elementen mit dem Optikträger verbunden werden, wobei die letztgenannte Alternative zu einer verbesserten Wirtschaftlichkeit des Herstellungsprozesses führt.

Das Einbringen der Blendenöffnungen, Befestigungsöffnungen sowie der Aussparungen in den Optikträger eignet sich grundsätzlich ebenso wie das Anspritzen oder Angießen der diffraktiven und/oder refraktiven optischen Elemente für die voll- oder halbautomatische Fertigung in einem Quasi-Endlos-Verfahren. Hierfür sollte ein streifenförmiger Optikträgerrohling flexibel ausgebildet sein und in aufgewickelter Form vorliegen. Bei der Fertigung wird der Optikträgerrohling dann sukzessive abgewickelt und mittels eine sich periodisch wiederholenden Stanzvorgangs mit den Blendenöffnungen, gegebenenfalls auch mit Befestigungsöffnungen bzw. Aussparungen versehen. Anschließend werden mittels eines sich ebenfall periodisch wiederholenden Spritz- oder Gießprozesses die optischen Elemente im Bereich der Blendenöffnungen an den Optikträger angespritzt. Anschließend kann der so bearbeitete Optikträgerstreifen entweder wieder aufgewickelt oder aber in bestimmten Längen abgetrennt werden, um so die letztlich zum Einsatz gelangenden Optikträger zu erhalten.
Ebenso ist es möglich, das beschriebene Quasi-Endlos-Verfahren in mehrere Quasi-Endlos-Verfahren aufzuteilen. Zum Beispiel kann es sinnvoll sein, in einem ersten Quasi-Endlos-Verfahren den in aufgewickelter Form vorliegenden Optikträgerrohling abzuwickeln, mit allen erforderlichen Öffnungen und Aussparungen zu versehen, und anschließend wieder aufzuwickeln. In einem zweiten Quasi-Endlos-Verfahren kann nun der so vorbereitete und wieder aufgewickelte Optikträger erneut abgewickelt und mittels eines Spritz- oder Gießprozesses mit den optischen Elementen versehen werden.

Weitere bevorzugte Ausführungsformen der Erfindung sind in den Unteransprüchen beschrieben.

Die Erfindung wird nachfolgend anhand von Ausführungsbeispielen unter Bezugnahme auf die Zeichnungen näher beschrieben; in diesen zeigen:
- Fig. 1: eine Draufsicht auf einen Abschnitt eines erfindungsgemäß eingesetzten Optikträgers,
- Fig. 2: eine Ansicht gemäß Fig. 1, bei der der Optikträger mit diffraktiven bzw. refraktiven optischen Elementen bestückt ist,
- Fig. 3: eine teilweise geschnittene Seitenansicht eines Optikträgers gemäß Fig. 2 während des Fertigungsprozesses mit angesetztem Spritzgießwerkzeug,
- Fig. 4: eine geschnittene Seitenansicht eines erfindungsgemäßen Optikträgers, der mit einem diffraktiven bzw. refraktiven optischen Element verbunden ist,
- Fig. 5: einen mit einem schematisch dargestellten Optikträger verbundenen Elektronikträger,
- Fig. 6: eine geschnittene Seitenansicht eines mit diffraktiven und/oder refraktiven optischen Elementen versehenen Optikträgers, an dem ein Elektronikträger befestigt ist,
- Fig. 7: eine teilweise geschnittene Stirnseitenansicht eines mit Optikträger und Elektronikträger bestückten Stranggussprofils gemäß einer ersten Ausführungsform, und
- Fig. 8: eine teilweise geschnittene Stirnseitenansicht eines mit Optikträger und Elektronikträger bestückten Stranggussprofils gemäß einer weiteren Ausführungsform.

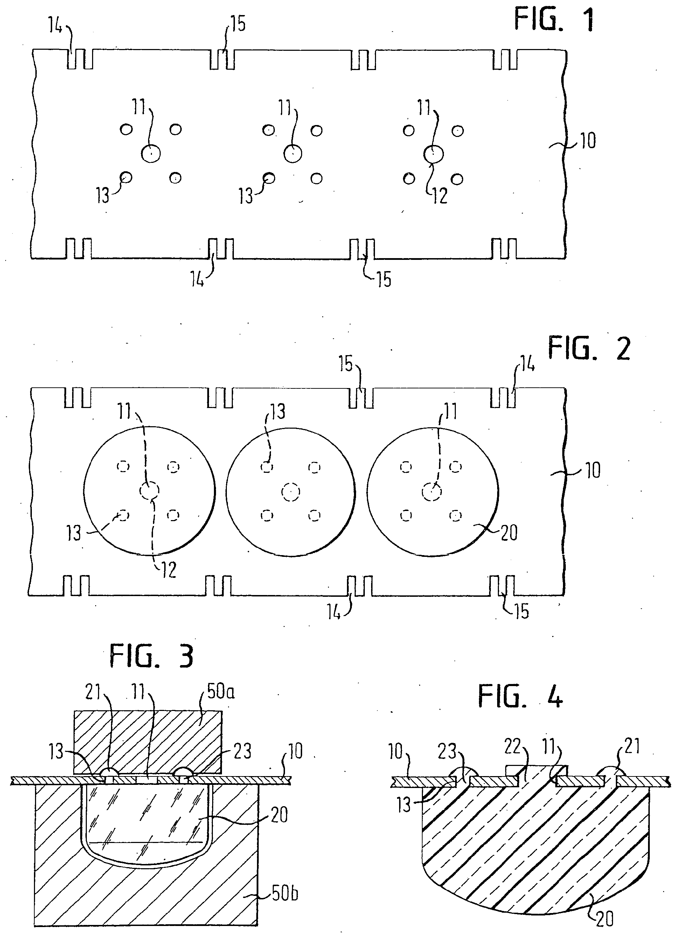

Fig. 1 zeigt einen streifenförmigen Abschnitt eines Optikträgers 10, der mit insgesamt drei kreisförmigen, entlang einer geraden Linie äquidistant angeordneten Blendenöffnungen 11 versehen ist.

Der Optikträger 10 kann aus lichtundurchlässigem Material gefertigt sein und insbesondere aus Metall oder Kunststoff bestehen.

Um jede der Blendenöffnungen 11 sind jeweils vier zusätzlichen Befestigungsöffnungen 13 gleich verteilt angeordnet, die zur Befestigung der in Fig. 1 nicht dargestellten diffraktiven und/oder refraktiven optischen Elemente dienen. An beiden Rändern des Optikträgers 10 sind Aussparungen 14 angebracht, die sich senkrecht zu Längsachse der Optikträgers 10 erstrecken und jeweils aus zwei nebeneinander angeordneten Ausnehmungen bestehen, so dass zwischen diesen Ausnehmungen jeweils eine Lasche 15 ausgebildet ist. Die Aussparungen 14 sind wiederum äquidistant zueinander angeordnet und befinden sich - bezogen auf die Längsachse des Optikträgers 10 - jeweils mittig zwischen zwei Blendenöffnungen 11.

Fig. 2 zeigt den Optikträger 10 gemäß Fig. 1, jedoch mit diffraktiven und/ oder refraktiven optischen Elementen 20 versehen. Die optischen Elemente 20 sind jeweils als kreisrunde Linsen ausgebildet, deren optische Achsen mit den Mittelpunkten der kreisförmigen Blendenöffnungen 11 zusammenfallen. Die vier einem optischen Element 20 zugeordneten Befestigungsöffnungen 13 sind vom jeweiligen optischen Element 20 ebenso wie die zugeordnete Blendenöffnung 11 überdeckt, so dass Befestigungsöffnungen 13 und Blendenöffnungen 11 in Fig. 2 dementsprechend nur gestrichelt dargestellt sind.

Fig. 3 zeigt, wie ein diffraktives bzw. refraktives optisches Element 20 mittels eines Spritzgießverfahrens an einen Optikträger 10 angespritzt wird. Zu sehen sind das obere 50a und das untere 50b Spritzgießwerkzeug, die gemeinsam die Blendenöffnung 11 sowie die Befestigungsöffnungen 13 umschließen. Das Material für ein diffraktives bzw. refraktives optisches Element 20 ist in das geschlossene Werkzeug 50a, 50b eingespritzt. Das optische Element 20 ist mit integral angeformten, pilzförmigen Fortsätzen 21 versehen, die Hinterschneidungen 23 aufweisen und die sich durch die Befestigungsöffnungen hindurch erstrecken. Die Ränder der Befestigungsöffnungen 13 greifen in die genannten Hinterschneidungen 23 ein, so dass das optische Element 20 mit dem Optikträger 10 fest verbunden ist.

Fig. 4 zeigt ein an einen Optikträger 10 angespritztes diffraktives bzw. refraktives optisches Element 20. Im Unterschied zu Fig. 3 ist das optische Element 20 nicht nur über daran ausgebildete Fortsätze 21 mit Hinterschneidungen 23 mit dem Optikträger 10 verbunden. Vielmehr ist an das optische Element 20 zusätzlich ein sich durch die Blendenöffnung 11 erstreckender pilzförmiger Zapfen angeformt, in dessen Hinterschneidung 22 der Rand der Blendenöffnung 11 eingreift, um so das optische Element 20 noch besser am Optikträger 10 zu fixieren.

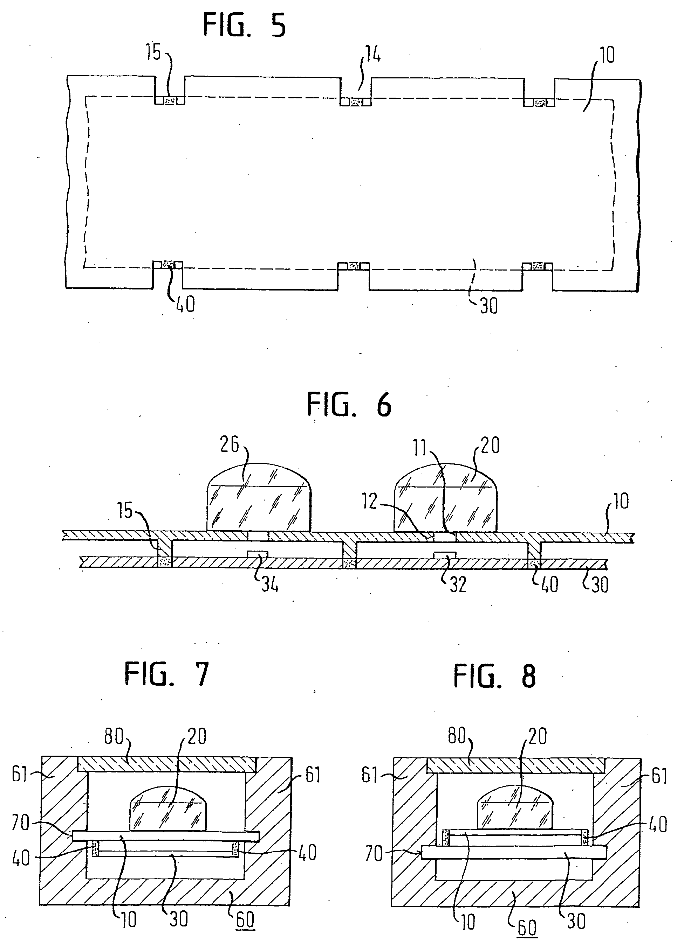

Fig. 5 zeigt einen schematisch, ohne Blenden- und Befestigungsöffnungen dargestellten Optikträger 10 mit darunter angeordnetem Elektronikträger 30. Die Breite des Elektronikträgers 30 ist etwas geringer als die Breite des Optikträgers 10. Die im Bereich der randseitigen Aussparungen 14 des Optikträgers 10 ausgebildeten Laschen 15 (siehe Fig. 1) sind rechtwinklig nach unten gebogen und mit ihrem stirnseitigen Ende mit dem Elektronikträger 30 an den Lötstellen 40 verlötet, um so eine feste, unverrückbare Verbindung zwischen Optikträger 10 und Elektronikträger 30 herzustellen. Anstelle einer Lötverbindung könnte auch eine Schnappverbindung eingesetzt werden.

Fig. 6 zeigt die Anordnung gemäß Fig. 5 in einer geschnittenen Seitenansicht. Zusätzlich sind in Fig. 6 die an den Blendenöffnungen 11 angeordneten diffraktiven bzw. refraktiven optischen Elemente 20, 26 sowie ein Sendeelement 32 und ein Empfangselement 34 gezeigt. Aus Gründen der Übersichtlichkeit ist die Verbindung zwischen optischen Elementen 20 und Optikträger 10 nicht dargestellt.

Das Sendeelement 32 und das Empfangselement 34 sind auf dem Elektronikträger 30 jeweils ausgerichtet zur optischen Achse des zugeordneten optischen Elements 20, 26 befestigt. Das Sendeelement 32 kann eine beliebige Strahlungsquelle sein, insbesondere eine Leuchtdiode, eine Infrarot-Sendediode oder eine Laserdiode. Die Strahlung kann vom Sendeelement 32 entweder kontinuierlich oder moduliert abgegeben werden. Das Empfangselement 34 kann als lichtempfindlicher Halbleiter, beispielsweise als Fotodiode, Fototransistor oder als lichtempfindlicher Widerstand ausgebildet sein.

Beim Betrieb der Anordnung gemäß Fig. 6 kann die vom Sendeelement 32 ausgehende Strahlung mittels des optischen Elements 20 in geeigneter Weise so geformt werden, dass sie von einem - nicht dargestellten - Reflektor zum optischen Element 26 reflektiert wird, welches die empfangene Strahlung letztlich gebündelt zum Empfangselement 34 lenkt.

Fig. 7 zeigt einen Schnitt durch ein U-förmiges Stranggussprofil 60, dessen beide Schenkel 61 mit sich nach innen öffnenden Haltenuten 70 versehen sind. In den Haltenuten 70 ist eine Einheit bestehend aus einem bestückten Optikträger 10 und einer daran befestigten Elektronikplatine 30 eingeschoben. Der Optikträger 10 ragt seitlich über die Elektronikplatine 30 hinaus. Die überstehenden Ränder des Optikträgers 10 sind in die Haltenuten 70 eingeführt, so dass die gesamte Einheit 10, 30 im Stranggussprofil 60 gehalten wird.

Im Bereich der offenen Seite des U-förmigen Stranggussprofils 60 ist eine für die verwendete Strahlung transparente Abdeckscheibe 80 vorgesehen, um die optische Anordnung gegenüber Umwelteinflüssen zu schützen. Bei Bedarf kann die Abdeckscheibe 80 aus einem optischen Filtermaterial bestehen.

Die in Fig. 8 gezeigte Darstellung entspricht der Darstellung gemäß Fig. 7, jedoch ragt hier die Elektronikplatine 30 seitlich über den Optikträger 10 hinaus. Hier ist dementsprechend die Einheit aus Elektronikträger 30 und Optikträger 10 an den überstehenden Rändern des Elektronikträgers 30 in die Haltenuten 70 des Stranggussprofils 60 eingeführt und darin gehalten.

Alternativ zu den in den Fig. 7 und 8 gezeigten Ausführungsformen ist es auch möglich, in einem Stranggussprofil 60 jeweils separate Haltenuten für die Elektronikplatine 30 und den Optikträger 10 vorzusehen. In diesem Fall ist es dann nicht mehr nötig, Elektronikplatine 30 und Optikträger 10 zusätzlich miteinander zu verbinden. Lediglich eine Relativverschiebung zwischen Elektronikplatine 30 und Optikträger 10 entlang der Längsachse des Stranggussprofils 60 muss mittels geeigneter mechanischer Maßnahmen verhindert werden.

### Bezugszeichenliste

- 10: Optikträger
- 11: Blendenöffnung
- 12: Rand der Blendenöffnung
- 13: Zusätzliche Öffnung
- 14: Aussparung im Optikträger
- 15: Lasche
- 20: Diffraktives und/oder refraktives optisches Element
- 21: Fortsätze der diffraktiven bzw. refraktiven optischen Elemente
- 22: Hinterschneidung
- 23: Hinterschneidung
- 26: Diffraktives und/oder refraktives optisches Element
- 30: Elektronikträger, Elektronikplatine
- 32: Sendeelement
- 34: Empfangselement
- 40: Lötstellen
- 50a: Oberes Spritzgießwerkzeug
- 50b: Unteres Spritzgießwerkzeug
- 60: Stranggussprofil
- 70: Haltenut
- 80: Abdeckscheibe

## Patentansprüche

1. Optische Anordnung mit einer Mehrzahl von Sendeelementen und/oder Empfangselementen, einer Mehrzahl von diffraktiven und/oder refraktiven optischen Elementen (20) und einem Optikträger (10) für die diffraktiven und/oder refraktiven optischen Elemente (20),
**dadurch gekennzeichnet, dass**
der Optikträger (10) Blendenöffnungen (11) aufweist, in deren Bereich die diffraktiven und/oder refraktiven optischen Elemente (20) mittels eines Spritz- oder Gießprozesses mit dem Optikträger (10) verbunden sind.

2. Optische Anordnung nach Anspruch 1,
**dadurch gekennzeichnet, dass**
die diffraktiven und/oder refraktiven optischen Elemente (20) als Linsen ausgebildet sind.

3. Optische Anordnung nach einem der vorhergehenden Ansprüche,
**dadurch gekennzeichnet, dass**
die diffraktiven und/oder refraktiven optischen Elemente (20) einzeln und insbesondere voneinander beabstandet oder aneinander angrenzend auf dem Optikträger (10) angebracht sind, und/oder zumindest je eine Hinterschneidung (22) aufweisen, in die der Rand (12) der Blendenöffnung (11) eingreift.

4. Optische Anordnung nach einem der vorhergehenden Ansprüche,
**dadurch gekennzeichnet, dass**
der Optikträger (10) außer den Blendenöffnungen (11) noch zusätzliche Befestigungsöffnungen (13) für die diffraktiven und/oder refraktiven optischen Elemente (20) aufweist, wobei insbesondere jeder Blendenöffnung (11) eine Anzahl zusätzlicher Befestigungsöffnungen (13) zugeordnet ist, wobei die einer Blendenöffnung (11) zugeordneten zusätzlichen Befestigungsöffnungen (13) jeweils im wesentlichen gleich verteilt um diese Blendenöffnung (11) herum angeordnet sind.

5. Optische Anordnung nach einem der vorhergehenden Ansprüche,
**dadurch gekennzeichnet, dass**
die diffraktiven und/oder refraktiven optischen Elemente (20) in die Befestigungsöffnungen (13) eingreifende Fortsätze (21) mit Hinterschneidungen (23) aufweisen.

6. Optische Anordnung nach einem der vorhergehenden Ansprüche,
**dadurch gekennzeichnet, dass**
nur bestimmte Blendenöffnungen (11) mit diffraktiven und/oder refraktiven optischen Elementen (20) versehen sind, und/oder dass die Blendenöffnungen (11) als Blendentubusse ausgeführt sind.

7. Optische Anordnung nach einem der vorhergehenden Ansprüche,
**dadurch gekennzeichnet, dass**
der Optikträger (10) aus lichtundurchlässigem Material, insbesondere aus Metall oder Kunststoff besteht, und/oder als Stanzstreifen oder als ablängbarer Streifen ausgebildet ist.

8. Optische Anordnung nach einem der vorhergehenden Ansprüche,
**dadurch gekennzeichnet, dass**
der Optikträger (10) in seinem Randbereich Aussparungen (14) aufweist, und/oder
dass der Optikträger (10) als starres Element oder flexibel, insbesondere aufwickelbar, ausgebildet ist.

9. Optische Anordnung nach einem der vorhergehenden Ansprüche,
**dadurch gekennzeichnet, dass**
die Sendeelemente und/oder Empfangselemente auf einem starren oder flexiblen Elektronikträger (30), bevorzugt einer Elektronikplatine, angeordnet sind, wobei insbesondere der mit den Sendeelementen und/oder Empfangselementen versehene Elektronikträger (30) und der Optikträger (10) mittels einer Schnappverbindung (40) miteinander zu einer Einheit verbunden sind.

10. Optische Anordnung nach Anspruch 9,
**dadurch gekennzeichnet, dass**
die Einheit, bestehend aus dem mit diffraktiven und/oder refraktiven optischen Elementen (20) versehenen Optikträger (10) und dem damit verbundenen, mit den Sendeelementen und/oder Empfangselementen versehenen Elektronikträger (30) , in einem Stranggussprofil (60), bevorzugt einem Aluminiumprofil, angeordnet ist, welches insbesondere U-förmig ausgebildet ist und/oder welches Haltenuten (70) für den Optik- und/oder den Elektronikträger (30) aufweist.

11. Lichtgitter mit zumindest einer optischen Anordnung nach einem der vorhergehenden Ansprüche.

12. Verfahren zur Herstellung einer optischen Anordnung mit einer Mehrzahl von Sendeelementen und/oder Empfangselementen, einer Mehrzahl von diffraktiven und/oder refraktiven optischen Elementen (20) und einem Optikträger (10) für die diffraktiven und/oder refraktiven optischen Elemente (20),
**dadurch gekennzeichnet, dass**
- in einem ersten Verfahrensschritt der Optikträger (10) zumindest mit Blendenöffnungen (11) versehen wird,
- in einem weiteren Verfahrensschritt die diffraktiven und/oder refraktiven optischen Elemente (20) mittels eines Spritz- oder Gießprozesses im Bereich der Blendenöffnungen (11) mit dem Optikträger (10) verbunden werden.

13. Verfahren nach Anspruch 12,
**dadurch gekennzeichnet, dass**
das mittels eines einzigen Spritz- oder Gießprozesses ein einzelnes optisches Element (20) oder eine Gruppe von optischen Elementen (20) mit dem Optikträger (10) verbunden werden, und/oder
dass das Verbinden der diffraktiven und/oder refraktiven optischen Elemente (20) mit dem Optikträger (10) in einem Quasi-Endlos-Verfahren erfolgt, wobei der in aufgewickelter Form vorliegende Optikträger (10) abgewickelt und der Spritz- oder Gießmaschine zugeführt wird, und dass anschließend der mit den diffraktiven und/oder refraktiven optischen Elementen (20) versehene Optikträger (10) abgelängt wird.
